## Europäisches Patentamt

## European Patent Office

## Office européen des brevets

(19)

(11) Veröffentlichungsnummer: **0 053 837**
**B1**

(12)

# EUROPÄISCHE PATENTSCHRIFT

(45) Veröffentlichungstag der Patentschrift:
**01.08.84**

(21) Anmeldenummer: **81110258.1**

(22) Anmeldetag: **08.12.81**

(51) Int. Cl.³: **C 01 B 3/56, B 01 D 53/04**

(54) **Adsorptionsverfahren und Anlage zur Durchführung des Verfahrens.**

(30) Priorität: **09.12.80 DE 3046268**
**09.12.80 DE 3046267**

(43) Veröffentlichungstag der Anmeldung:
**16.06.82 Patentblatt 82/24**

(45) Bekanntmachung des Hinweises auf die Patenterteilung:
**01.08.84 Patentblatt 84/31**

(84) Benannte Vertragsstaaten:
**AT BE DE FR GB IT NL**

(56) Entgegenhaltungen:
**EP - A - 0 008 512**
**DE - A - 2 604 305**
**DE - A - 2 624 346**
**DE - A - 2 854 060**
**DE - A - 2 911 669**
**DE - B - 2 629 450**
**US - A - 4 077 780**

(73) Patentinhaber: **Linde Aktiengesellschaft,**
**Abraham-Lincoln-Strasse 21, D-6200 Wiesbaden (DE)**

(72) Erfinder: **Benkmann, Christian, Meisenstrasse 39,**
**D-8032 Gräfelfing (DE)**

(74) Vertreter: **Schaefer, Gerhard, Dr., Linde**
**Aktiengesellschaft Zentrale Patentabteilung,**
**D-8023 Höllriegelskreuth (DE)**

## Beschreibung

Die Erfindung betrifft ein Verfahren zum Zerlegen von mindestens zwei Rohgasströmen unterschiedlicher Zusammensetzung in einer einzigen Adsorptionsanlage mit mehreren, im Druckwechsel betriebenen, zyklisch umschaltbaren Adsorbern, die jeweils eine Adsorptionsphase und eine Stufen der Entspannung, der Spülung und des Druckaufbaus umfassende Regenerierphase durchlaufen. Als Rohgasstrom wird dabei jeder Gasstrom angesehen, der der Adsorptionsanlage zugeführt und in ihr zerlegt wird. Ausserdem betrifft die Erfindung eine Adsorptionsanlage zur Durchführung des Verfahrens.

Ein Verfahren der genannten Art ist bereits aus der DE-A-2 854 060 bekannt. Dort wird aus einem ersten Rohgasstrom ein Einsatzgas für eine chemische Reaktion in einer Druckwechsel-Adsorptionsanlage abgetrennt. Dieses Einsatzgas gelangt dann in eine Reaktionszone, in der nur eine relativ geringe Umsetzung erfolgt, so dass das aus dieser Zone austretende Reaktionsprodukt noch einen hohen Gehalt an nicht umgesetztem Einsatzgas aufweist. Das Reaktionsprodukt wird deshalb (als zweiter Rohgasstrom) erneut in die Adsorptionsanlage geführt, um eine Rückführung der nicht umgesetzten Anteile des Einsatzgases in die Reaktionszone zu bewirken. Bei diesem bekannten Verfahren werden die beiden Rohgasströme während unterschiedlicher Betriebsphasen jedem Adsorber aufgegeben. Insbesondere sind hierfür entweder zwei aufeinanderfolgende Adsorptionsphasen oder eine Druckaufbauphase und eine Adsorptionsphase vorgesehen. Das Verfahren ist insbesondere auf die Zerlegung von Luft und die Abtrennung von Ozon aus einem Sauerstoff-Ozon-Gemisch ausgerichtet.

Die Beladung der Adsorber mit verschiedenen Komponenten aus verschiedenen Rohgasströmen hat zur Folge, dass unter Berücksichtigung des insgesamt einem Adsorber zugeführten Rohgases eine Verdünnung der zu adsorbierenden Komponente des einen Rohgases durch das jeweils andere Rohgas stattfindet. Durch eine solche Verdünnung wird eine niedrigere Beladung am Adsorptionsmittel erreicht, so dass für die Zerlegung des Rohgases mehr Adsorptionsmittel benötigt wird als bei der getrennten Zerlegung der Rohgasströme in zwei Adsorptionsanlagen. Ein weiterer Nachteil ist, dass im Restgas auch alle adsorbierten Komponenten enthalten sind. In vielen Anwendungsfällen weisen die aus den Teilströmen abgetrennten Komponenten nämlich stark voneinander abweichende Eigenschaften auf, die eine getrennte Verwendung dieser Restgasströme als zweckmässig erscheinen lassen.

Diese Nachteile liessen sich bisher nur durch den Einsatz je einer Druckwechsel-Adsorptionsanlage für jeden Rohgasstrom vermeiden.

Der Erfindung liegt die Aufgabe zugrunde, ein Verfahren der eingangs genannten Art so auszugestalten, dass bei möglichst geringem Aufwand die nicht adsorbierten Komponenten des Rohgases in hoher Ausbeute gewonnen werden können.

Diese Aufgabe wird dadurch gelöst, dass jedem Rohgasstrom eine Gruppe von Adsorbern zugeordnet wird, durch die der jeweilige Rohgasstrom in zyklisch umschaltbarer Weise geführt und dabei zerlegt wird, dass jeder Adsorber nur einer Gruppe zugehört und dass mindestens während einer Stufe der Entspannung anfallendes Entspannungsgas in einen in einer Regenerierphase befindlichen Adsorber einer anderen Gruppe geleitet wird. Mit einem derartigen Entspannungsgas kann ein Druckausgleich mit einem im Druckaufbau befindlichen Adsorber einer anderen Gruppe erfolgen, oder ein solches Entspannungsgas kann zur Spülung eines Adsorbers einer anderen Gruppe herangezogen werden.

Das wesentliche Merkmal des erfindungsgemässen Verfahrens ist die austrittsseitige Kopplung zweier oder mehrerer eintrittsseitig getrennter Adsorptionsanlagen, durch die eine besonders hohe Ausbeute der nicht adsorbierten Komponenten der Rohgase ermöglicht wird. Begründet wird die hohe Ausbeute dadurch, dass eine erfindungsgemässe integrierte Anlage eine stärkere Unterteilung der Regenerierphase in einzelne Stufen erlaubt als einzelne Anlagen mit insgesamt der gleichen Anzahl an Adsorbern. Die Erhöhung der Adsorberzahl durch die Integration zweier eintrittsseitig getrennter Adsorptionsanlagen erlaubt, mehr Druckausgleichstakte während der Regenerierung durchzuführen und damit die Verluste der nicht adsorbierten Komponenten zu verringern. Durch das erfindungsgemässe Verfahren lassen sich Ausbeuten erreichen, die bei getrennten Anlagen mit jeweils der gleichen Adsorberzahl wie die erfindungsgemäss integrierte Anlage erreichbar wären, wozu jedoch erheblich höhere Investitionen erforderlich wären.

In einer besonderen Ausgestaltung des erfindungsgemässen Verfahrens werden die Restgase, die bei der Desorption der Adsorber anfallen, zumindest zum Teil gruppenweise getrennt voneinander abgezogen. Bei unterschiedlichen Zusammensetzungen der verschiedenen Restgase können diese dadurch einer jeweils günstigen Verwendung zugeführt werden.

In einer weiteren günstigen Ausgestaltung der Erfindung werden die während einer Adsorptionsphase aus den einzelnen Adsorbergruppen austretenden Produktgase über eine gemeinsame Produktleitung abgezogen.

Das erfindungsgemässe Verfahren ist besonders geeignet für die Zerlegung von zwei oder mehr Rohgasströmen unterschiedlicher Zusammensetzung, die eine gemeinsame, nicht oder nur gering adsorbierbare Fraktion und daneben verschiedene adsorbierbare Komponenten enthalten. In einem solchen Fall kann von den Austrittsenden der einzelnen Adsorbergruppen Produktgas abgezogen und über eine gemeinsame Produktleitung abgeführt werden, und darüber hinaus sind aus jeder Adsorbergruppe getrennte Restgasfraktionen zu gewinnen. Im Vergleich zu mehreren getrennten Anlagen für jeweils ein Rohgas kann damit bei gleichen Investitionskosten eine wesentlich höhere Ausbeute an der nicht oder nur gering adsorbierten Komponente erzielt werden. Bei Auslegung der getrennten Anlagen auf die gleiche Ausbeute ergäben sich dagegen wesentlich höhere Investitionskosten.

Beim erfindungsgemässen Verfahren bestehen die einzelnen Adsorbergruppen aus jeweils mindestens

zwei Adsorbern, wobei die Anzahl der Adsorber innerhalb der einzelnen Gruppen verschieden sein kann. In einer vorteilhaften Weiterbildung der Erfindung enthalten die Gruppen jedoch mindestens vier Adsorber, um eine kontinuierliche Produktgasabgabe aus den einzelnen Gruppen zu gewährleisten.

Die von den einzelnen Adsorbern im Betriebsfall zu durchlaufenden Zyklen von Adsorptions- und Regenerierphase sind für die Adsorber einer Gruppe jeweils gleich, jedoch in ihrem zeitlichen Ablauf gegeneinander versetzt. Die Zyklen unterschiedlicher Gruppen können dagegen verschieden sein, sofern nur gewährleistet wird, dass die Zyklen hinsichtlich der gemeinsamen Regenerierstufen aufeinander abgestimmt sind. Sofern alle Gruppen gleichviele Adsorber enthalten, ist es besonders zweckmässig, dass alle Adsorber gleichartige, zeitlich gegeneinander versetzte Zyklen durchlaufen.

In einer besonderen Weiterbildung der Erfindung wird das während der Regenerierung aus einer Adsorbergruppe abgezogene Restgas als Rohgas für eine andere Adsorbergruppe verwendet. Dieses Verfahren führt zu besonders hohen Ausbeuten der nicht adsorbierten Komponenten, wenn das Restgas durch Spülung der Adsorber mit an Produktgas reichem Entspannungsgas oder direkt mit Produktgas durchgeführt wird. Von besonderem Vorteil ist dieses Verfahren bei der Zerlegung eines Rohgases, das die nicht adsorbierbare Komponente bereits in hoher Konzentration enthält. In solchen Fällen ergibt sich nämlich häufig ein Restgas, das die nicht adsorbierbare Komponente noch in relativ hoher Konzentration enthält.

Eine zur Durchführung des erfindungsgemässen Verfahrens geeignete Adsorptionsanlage besteht aus mehreren Gruppen von Adsorbern, deren Zahl sich nach der Anzahl der Rohgasströme richtet. Die Adsorber jeder Gruppe sind dabei an ihrer Eintrittsseite mit je einer Rohgasleitung und einer Restgasleitung verbunden und austrittsseitig mit einer Produktgasleitung und mit einem allen Adsorbern gemeinsamen System von Druckausgleichsleitungen und Spülgasleitungen verbunden. Die Leitungen sind dabei in üblicher Weise mit Schaltventilen, die den Ablauf der Zyklen der Adsorber regeln, versehen.

Häufig ist es zweckmässig, alle Adsorber mit einer gemeinsamen Produktgasleitung zu verbinden und von dieser Leitung Abzweigungen zu den Austrittsenden der Absorber vorzusehen, über die ein Druckaufbau der Adsorber, zweckmässigerweise die letzte Druckaufbaustufe, durchgeführt werden kann.

Das erfindungsgemässe Verfahren sowie die erfindungsgemässe Adsorptionsanlage können beispielsweise bei der Gewinnung von Wasserstoff aus verschiedenen Rohgasströmen, aber auch bei anderen Gastrennungen wie beispielsweise der Abtrennung von Stickstoff aus Luft und anderen Gasströmen, der Abtrennung von Methan aus leichte Kohlenwasserstoffe enthaltenden Strömen oder der Abtrennung von Kohlendioxid aus Synthesegasen oder anderen Strömen eingesetzt werden.

Nachfolgend soll eine Ausgestaltung des erfindungsgemässen Verfahrens zur Gewinnung von Wasserstoff in Verbindung mit einer Dampfreformierung leichter Kohlenwasserstoffe unter Bildung von Wasserstoff erläutert werden. Bei der Dampfreformierung werden die eingesetzten Kohlenwasserstoffe mit Dampf vermischt und üblicherweise in einem Röhrenreaktor in Anwesenheit eines Katalysators umgesetzt. Die für die endotherme Reaktion erforderliche Energie wird durch äussere Beheizung der Reaktionsrohre bereitgestellt. Als Kohlenwasserstoff wird bevorzugt Methan eingesetzt, da es einen höheren Wasserstoffanteil aufweist als schwerere Kohlenstoffwasserstoffe, doch kommen auch andere Einsätze wie beispielsweise $C_3$- oder $C_4$-Kohlenwasserstoffe in Frage.

Das bei einer Dampfreformierung gebildete Gasgemisch besteht im wesentlichen aus Wasserstoff, Oxiden des Kohlenstoffs und enthält darüber hinaus noch geringe Mengen von leichten Kohlenwasserstoffen. Es ist deshalb erforderlich, den Wasserstoff als gewünschtes Verfahrensprodukt von den übrigen Komponenten zu befreien. Die Reinigung in einer Druckwechseladsorptionsanlage ist hierfür ein üblicher Verfahrensschritt, dem meist noch eine Konvertierung des Kohlenmonoxids vorgelagert ist, um bei hoher Temperatur unter Zugabe von Wasserdampf den Kohlenmonoxidgehalt unter Bildung weiterer Wasserstoffs und Kohlendioxids herabzusetzen. Ein Verfahren dieser Art ist in der DE-A-2 911 669 beschrieben.

Bei Verwendung eines bereits Wasserstoff enthaltenden Rohgases, beispielsweise eines Wasserstoff und leichte Kohlenwasserstoffe enthaltenden Raffineriegases, wird nach herkömmlicher Verfahrensweise je nach dem Wasserstoffgehalt des Rohgases entweder eine vorgeschaltete Abtrennung des Wasserstoffs in einer separatenn Zerlegungseinheit vorgenommen, oder der Wasserstoff wird mit durch die Dampfreformieranlage geleitet und dann gemeinsam mit dem dabei gebildeten Rohwasserstoff weiterverarbeitet.

Beide Verfahrensweisen sind nicht voll befriedigend, da entweder eine separate Zerlegungseinheit, beispielsweise eine Tieftemperaturanlage oder eine weitere Druckwechseladsorptionsanlage, benötigt wird, oder weil der durch die Dampfreformieranlage mit hindurchgeführte, im Rohgas enthaltene Wasserstoff einen Ballaststrom für diesen Verfahrensschritt darstellt. Während die erste Alternative hohe Investitionen für den Bau einer zur Durchführung geeigneten Anlage erfordert, ist die zweite Möglichkeit aus wärmetechnischer Hinsicht unbefriedigend. Ausserdem muss der Dampfreformierer wegen des Wasserstoff-Ballaststroms grösser als eigentlich erforderlich dimensioniert werden.

Bei Anwendung des erfindungsgemässen Adsorptionsverfahrens können die Unzulänglichkeiten in der bekannten Verfahrensweise vermieden werden. Dazu wird das Rohgas einer ersten Adsorbergruppe zugeführt und dort in eine Wasserstofffraktion sowie eine mit Kohlenwasserstoffen angereicherte Fraktion, die der Dampfreformierung zugeführt wird, zerlegt. Der bei der Dampfreformierung erzeugte Rohwasserstoff wird anschliessend in einer zweiten Adsorbergruppe gereinigt, wobei ein beispielsweise als Heizgas verwertbares Restgas anfällt.

Die Adsorptionsanlage wird in diesem Fall also unter solchen Bedingungen betrieben, dass neben dem Produktwasserstoff zwei weitere Fraktionen abgegeben werden, nämlich einmal die aus dem Rohgas abgetrennten Kohlenwasserstoffe, die der Dampfreformierung zugeführt werden und, getrennt davon, die aus dem reformierten Gas abgetrennten Verunreinigungen. Diese letztere Fraktion kann vorteilhaft als Heizgas für die Dampfreformierung verwendet und den Brennern des Reformierreaktors zugeleitet werden. Ein wesentliches Merkmal dieses Verfahrens ist demnach die Abgabe von drei getrennten Strömen aus der Adsorptionsanlage. Übliche Adsorptionsanlagen, in denen neben dem Produktgas lediglich eine weitere Fraktion abgegeben wird, wären dagegen für die gemeinsame Reinigung des Rohgases und des Rohwasserstoffs nicht geeignet, da hierbei neben dem Produktwasserstoff eine einzige Restgasfraktion anfallen würde, die Komponenten der beiden Einsatzströme enthielte. Wegen der Anwesenheit von Kohlenoxiden in diesem Restgas wäre das Gas nicht als Einsatz für eine Dampfreformierung geeignet, da diese Komponenten eine Schädigung des Reformierkatalysators bewirken würden.

Weitere Einzelheiten der Erfindung werden nachfolgend anhand der in den Zeichnungen in schematischer Weise dargestellten Ausführungsbeispiele erläutert.

Es zeigen:

Fig. 1 eine erfindungsgemässe Adsorptionsanlage mit zehn Adsorbern, die in zwei Gruppen aufgeteilt sind.

Fig. 2 ein Zeitablaufschema für den Betrieb der Anlage gemäss Fig. 1 und

Fig. 3 ein Schema, das den erfindungsgemässen Verfahrensablauf am Beispiel der Gewinnung von Wasserstoff zeigt.

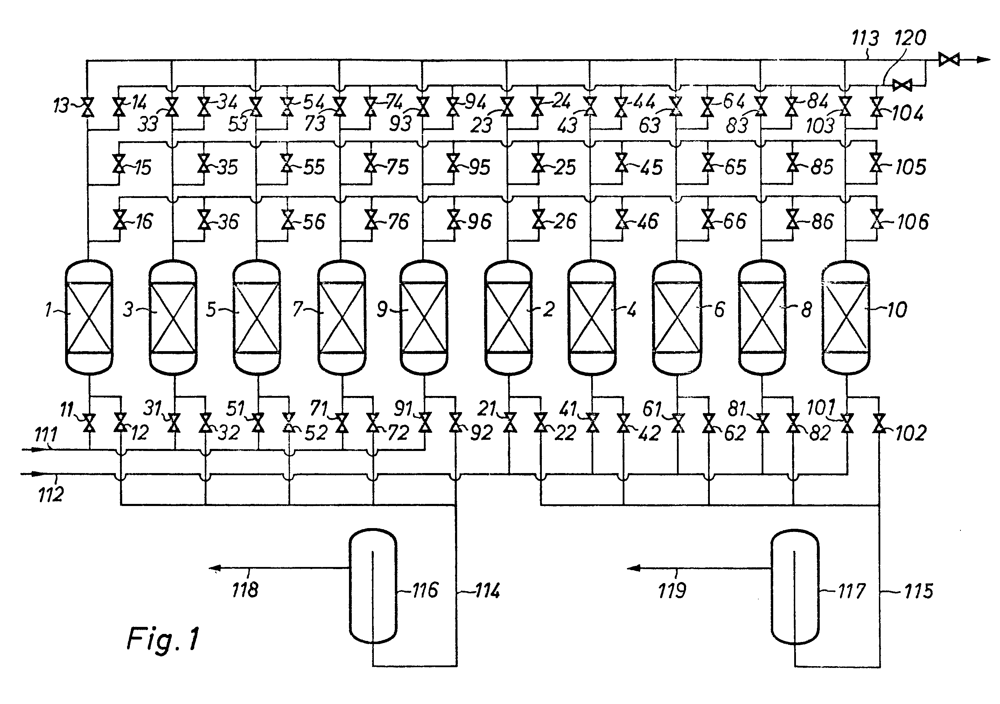

In der in Fig. 1 dargestellten Anlage sind die zehn Adsorber 1, 2, 3, 4, 5, 6, 7, 8, 9, 10 in zwei Gruppen von je fünf Adsorbern aufgeteilt. Eine, die Adsorber 1, 3, 5, 7 und 9 umfassende Gruppe ist eintrittsseitig an eine Rohgasleitung 111, die andere, die Adsorber 2, 4, 6, 8 und 10 umfassende Gruppe an eine zweite Rohgasleitung 112 angeschlossen. Das Austrittsende aller Adsorber ist mit einer gemeinsamen Produktgasleitung 133 verbunden.

Dem Adsorber 1 sind auf der Eintrittsseite Schaltventile 11 und 12 und auf der Austrittsseite Schaltventile 13, 14, 15 und 16 zugeordnet, durch deren Betätigung die einzelnen Phasen eines Zyklus umgeschaltet werden. In entsprechender Weise sind die übrigen Adsorber 2 bis 10 mit Schaltventilen 21-26 bis 101-106 ausgestattet.

Die durch die Endziffer 2 charakterisierten Schaltventile auf der Eintrittsseite der Adsorber stehen für beide Gruppen getrennt mit zwei Restgasleitungen 114 und 115 in Verbindung. Die Restgasleitungen führen in Pufferbehälter 116 und 117, aus denen über die Leitungen 118 bzw. 119 die Restgase abgezogen werden.

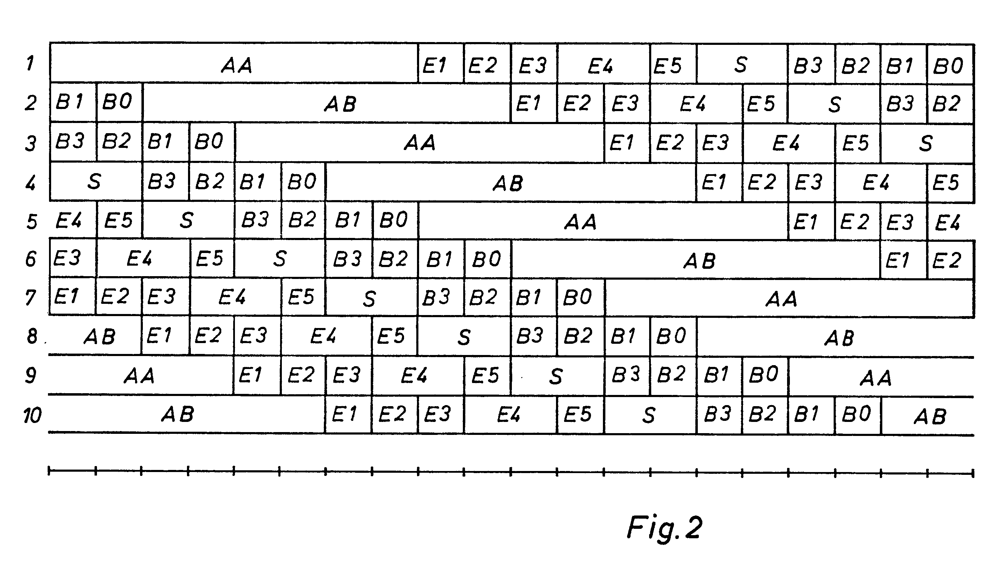

Die in den einzelnen Adsorbern nacheinander ablaufenden Vorgänge seien am Beispiel des Adsorbers 1 erläutert. Die in Klammern hinzugefügten Angaben AA, AB, E1 bis E5, S, B0 bis B3 beziehen sich auf die einzelnen Stufen des Zyklus, wie sie im Zeitablaufschema der Fig. 2 dargestellt sind.

Unter dem Adsorptionsdruck stehendes Rohgas aus Leitung 111 gelangt durch das geöffnete Ventil 11 in den Adsorber 1. Hier werden die leichter adsorbierbaren Komponenten festgehalten, während die schlechter adsorbierbaren Bestandteile die Anlage über das geöffnete Ventil 13 und die Produktgasleitung 113 verlassen. Die Adsorption kann unter Verwendung sämtlicher bekannter Adsorptionsmittel, z.B. Aktivkohle, Silikagel, Aluminiumoxidgel und Molekularsiebe, durchgeführt werden. Die Wahl des jeweiligen Adsorptionsmittels richtet sich dabei nach der Art des zu zerlegenden Gasgemisches. Während der Adsorption bildet sich innerhalb des Adsorbers eine Adsorptionsfront aus, die mit zunehmender Beladung in Richtung des Austrittsendes des Adsorbers fortschreitet. Die Adsorptionsphase (AA) wird beendet, bevor die Adsorptionsfront das Austrittsende des Adsorbers 1 erreicht hat. Hierzu werden die Ventile 11 und 13 geschlossen. Das im Adsorber 1 eingeschlossene Gas wird anschliessend in einer ersten Entspannungsstufe (E1) im Gleichstrom über das geöffnete Ventil 14 abgezogen und dem in einer dritten Druckaufbaustufe (B1) befindlichen Adsorber 6 über das geöffnete Ventil 64 zugeleitet. Nach erfolgtem Druckausgleich wird das Ventil 14 geschlossen und Ventil 15 geöffnet. Dadurch weiterhin aus dem Adsorber 1 abströmendes Entspannungsgas (E2) wird über das geöffnete Ventil 75 dem in einer zweiten Druckaufbaustufe (B2) befindlichen Adsorber 7 zugeleitet. Nach erfolgtem Druckausgleich wird das Ventil 75 geschlossen und durch Öffnen des Ventils 85 ein dritter Druckausgleich mit dem Adsorber 8 eingeleitet. Der Adsorber 1 durchläuft dabei eine dritte Entspannungsstufe (E3), während sich der Adsorber 8 in einer ersten Druckaufbaustufe (B3) befindet.

Nach den drei Druckausgleichsstufen schliesst sich für den Adsorber 1 eine weitere Entspannung (E4) an, während der Entspannungsgas nach Schliessung des Ventils 15 über das nunmehr geöffnete Ventil 16 und das geöffnete Ventil 96 in den Adsorber 9 gelangt. Im Adsorber 9 wird dabei eine Spülung (S) durchgeführt, und das dabei aus dem Eintrittsende des Adsorbers 9 austretende Gas wird über das geöffnete Ventil 92 in die Restgasleitung 114 abgegeben. Die Spülung des Adsorbers 9 durch das Entspannungsgas aus dem Adsorber 1 wird dann durch Schliessen des Ventils 96 beendet, und durch Öffnen des Ventils 106 wird weiterhin eine Spülung vorgenommen, nunmehr mit dem Adsorber 10, der einer anderen Gruppe angehört. Das am Eintrittsende dieses Adsorbers 10 austretende Spülgas wird durch das geöffnete Ventil 102 in die Restgasleitung 115 abgegeben.

Die bisher beschriebenen vier Entspannungsstufen werden alle in Adsorptionsrichtung vorgenommen, das Entspannungsgas wird also am Austrittsende des Adsorbers abgezogen. Der Druckaufbau bzw. die Spülung der Adsorber mit dem dabei anfallenden Entspannungsgas erfolgt dagegen stets entgegen der Adsorptionsrichtung.

Der nunmehr weitgehend entspannte Adsorber 1 wird anschliessend in einer fünften Entspannungsstufe (E5) bei nunmehr geschlossenem Ventil 16 durch Öffnen des Ventils 12 an die Restgasleitung 114 angeschlossen und auf den niedrigsten Verfahrensdruck, den Spüldruck, entspannt. Anschliessend wird Spülgas über das wieder geöffnete Ventil 16 aus dem in einer vierten Entspannungsstufe befindlichen Adsorber 2 über das ebenfalls geöffnete Ventil 26 auf das Austrittsende des Adsorbers 1 gegeben, so dass durch das weiterhin geöffnete Ventil 12 ein Restgas über Leitung 114 abgegeben wird. Nach Beendigung der Hälfte des Spültaktes wird Ventil 26 geschlossen und weiteres Spülgas durch das geöffnete Ventil 36 aus dem nunmehr in einer vierten Entspannungsstufe befindlichen Adsorber 3 in den Adsorber 1 geleitet. Nach Beendigung der Spülphase werden die Ventile 12 und 16 geschlossen, und der Adsorber 1 ist nunmehr von den in der Adsorptionsphase (AA) adsorbierten Komponenten befreit. Bevor ihm wiederum Rohgas zugeführt wird, erfolgt nunmehr ein vierstufiger Druckaufbau über das Austrittsende des Adsorbers. In einer ersten Druckaufbaustufe (B3) wird über die geöffneten Ventile 14 und 45 Entspannungsgas aus dem in einer dritten Entspannungsphase befindlichen Adsorber 4 eingeleitet. Nach erfolgtem Druckausgleich wird das Ventil 45 geschlossen und durch Öffnen des Ventils 55 gelangt weiteres Entspannungsgas aus dem in einer zweiten Entspannungsphase befindlichen Adsorber 5 in den Adsorber 1. Nach erfolgtem Druckausgleich wird das Ventil 15 geschlossen. Durch Öffnen des Ventils 14 wird eine dritte Druckaufbauphase (B1) eingeleitet, wobei ein Druckausgleich mit dem in einer ersten Entspannungsphase (E1) befindlichen Adsorber 6 über das geöffnete Ventil 64 erfolgt. Anschliessend folgt noch eine vierte Druckaufbaustufe (B0), während der der Adsorber 1 durch über Leitung 120 abgezweigtes Produktgas wieder auf den Adsorptionsdruck gebracht wird.

In der Fig. 2 ist ein Zeitablaufschema für die Adsorber 1 bis 10 der eben beschriebenen Anlage dargestellt. Die einzelnen Adsorber sind durch die untereinander angeordneten waagerechten Balken charakterisiert. Die Abszisse ist die Zeitachse, so dass zu gleichen Zeiten die Adsorber in den jeweils senkrecht übereinander angeordneten Betriebszuständen sind.

Das Schema stellt ein Prinzipschema dar. Aus diesem Grund ist auch auf der Abszisse keine definierte Zeit für die einzelnen Takte angegeben, da die Länge der einzelnen Verfahrensschritte innerhalb gewisser Grenzen den Verfahrensgegebenheiten, der Rohgaszusammensetzung, der gewünschten Produktgasreinheit usw., angepasst und variiert werden kann.

Die im Zeitablaufschema auftretenden Bezeichnungen haben die folgenden Bedeutungen:

AA kennzeichnet die Adsorptionsphase für das über Leitung 111 herangeführte Rohgas,

AB kennzeichnet die Adsorptionsphase für das über Leitung 112 herangeführte zweite Rohgas,

E1 kennzeichnet eine Entspannung in Adsorptionsrichtung zum Druckaufbau B1,

E2 kennzeichnet eine Entspannung in Adsorptionsrichtung zum Druckaufbau B2,

E3 kennzeichnet eine Entspannung in Adsorptionsrichtung zum Druckaufbau B3,

E4 kennzeichnet eine Entspannung in Adsorptionsrichtung zum Spülen,

E5 kennzeichnet eine Entspannung entgegen der Adsorptionsrichtung ins Restgas,

S kennzeichnet eine Spülung mit Entspannungsgas aus einer Stufe E4,

B1 kennzeichnet einen Druckaufbau mit einem Entspannungsgas von E1,

B2 kennzeichnet einen Druckaufbau mit einem Entspannungsgas von E2,

B3 kennzeichnet einen Druckaufbau mit einem Entspannungsgas von E3 und

B0 kennzeichnet einen Druckaufbau mit Produktgas.

Mit Hilfe dieser Angabe lässt sich aus dem Zeitablaufschema ohne weiteres ersehen, welche Adsorber jeweils in Druckausgleich miteinander stehen. So ist beispielsweise während des ersten Adsorptionstaktes ein Druckausgleich zwischen den Adsorbern 7 und 2 (Stufen E1 und B1) sowie 6 und 3 (Stufen E3 und B3) festzustellen. Die Adsorber 5 und 4 stehen während dieser Zeit ebenfalls in Verbindung, wobei Entspannungsgas (E4) aus Adsorber 5 zur Spülung des Adsorbers 4 anfällt. Die Adsorber 1, 8, 9 und 10 durchlaufen während dieser Zeit eine Adsorptionsphase. In entsprechender Weise lässt sich für jeden Takt die Adsorberschaltung ermitteln.

Wie aus dem Zeitablaufschema ersichtlich, sind zu gleicher Zeit jeweils vier Adsorber in einer Adsorptionsphase, und zwar stets zwei Adsorber jeder Gruppe. Die Adsorptionsphasen der einzelnen Adsorber sind um etwa ein Viertel ihrer Zeitdauer gegeneinander verschoben, so dass, wenn im Adsorber 1 die Adsorptionsphase beendet ist und die Adsorptionsphasen in den Adsorbern 2, 3 und 4 noch laufen, der Adsorber 5 zugeschaltet wird. Die Adsorptionsphasen und die einzelnen Stufen der Regenerierphase sind für alle Adsorber gleich. Ein vollständiger Zyklus besteht aus 20 Takten, von denen 8 die Adsorptionsphase ausmachen, je eine die Entspannungsstufen E1, E2, E3 und E5 sowie die Druckaufbaustufen B3, B2, B1 und B0. Die Entspannungsstufe E4 und die Spülung S umfassen schliesslich jeweils zwei Takte.

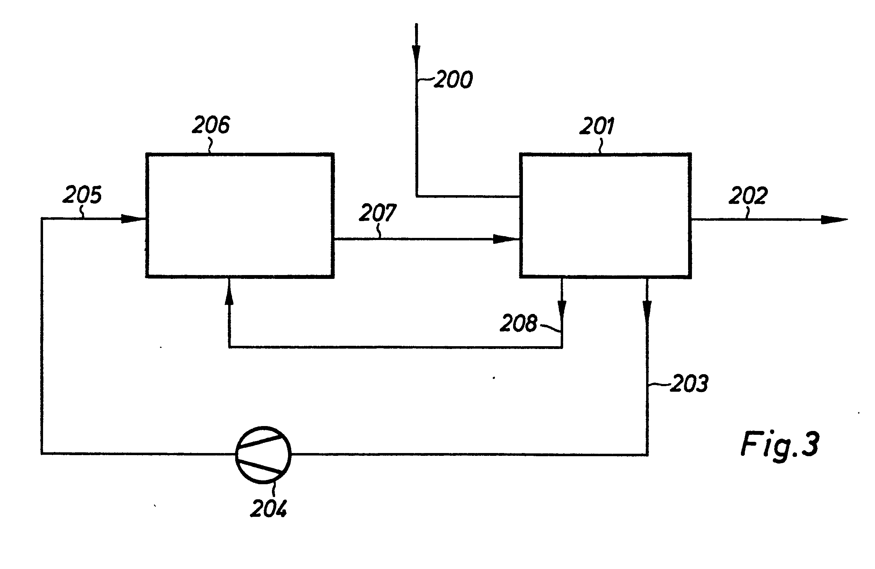

In Fig. 3 wird über Leitung 200 ein Gemisch aus Wasserstoff und leichten Kohlenwasserstoffen, beispielsweise ein Raffineriegas, zugeführt und in eine Druckwechsel-Adsorptionsanlage 201 geleitet. Aus der Druckwechsel-Adsorptionsanlage 201 wird über Leitung 202 der bei der Adsorption nicht in den Adsorbern zurückgehaltene Wasserstoff als Produktstrom abgezogen. Bei der Regenerierung der für die Zerlegung des Rohgases 200 vorgesehenen Adsorber fällt ein mit Kohlenwasserstoffen angereichertes Restgas an, das über Leitung 203 aus der Anlage abgezogen wird. Im Verdichter 204 wird dieses Gas auf einen für die Dampfreformierung geeigneten Druck verdichtet und gelangt anschliessend über Leitung 205 in eine Anlage 206 zur Dampfreformierung. Die Dampfreformierung, deren Verfahrensstufen im einzelnen nicht dargestellt sind, erfolgt in üblicher Weise. In dieser Stufe enthalten sind sowohl die Vorwärmung als auch die Abkühlung des Einsatzes bzw. Reaktionsprodukts sowie eine gegebenenfalls nachfolgende Konvertierung des Reaktionsprodukts zur weiteren Steigerung der Wasserstoffausbeute sowie andere bei der Dampfreformierung übliche Verfahrensschritte. Der hierbei gewonnene Rohwasserstoff wird schliesslich über Leitung 207 abgezogen. Er enthält neben Wasserstoff im wesentlichen leichte Kohlenwasserstoffe und Kohlenoxide. Der Rohwasserstoff wird ebenfalls der Druckwechsel-Adsorptionsanlage 201 zugeführt und dort in Wasserstoff-Produktgas und ein Restgas zerlegt. Der Wasserstoff wird ebenfalls über Leitung 202 abgezogen und einem Verbraucher zugeführt, während das bei der Regenerierung der Adsorber anfallende Restgas über Leitung 208 abgezogen und als Heizgas zu den Brennern des Dampfreformierers 206 geleitet wird.

Eine für die Zerlegung der beiden Gasströme geeignete Druckwechsel-Adsorptionsanlage ist schon anhand der Figuren 1 und 2 näher erläutert worden.

**Patentansprüche**

1. Verfahren zum Zerlegen von mindestens zwei Rohgasströmen unterschiedlicher Zusammensetzung in einer einzigen Adsorptionsanlage mit mehreren, im Druckwechsel betriebenen, zyklisch umschaltbaren Adsorbern, die jeweils eine Adsorptionsphase und eine Stufen der Entspannung, der Spülung und des Druckaufbaus umfassende Regenerierphase durchlaufen, dadurch gekennzeichnet, dass jedem Rohgasstrom eine Gruppe von Adsorbern zugeordnet wird, durch die der jeweilige Rohgasstrom in zyklisch umschaltbarer Weise geführt und dabei zerlegt wird, dass jeder Adsorber nur einer Gruppe zugehört und dass mindestens während einer Stufe der Entspannung anfallendes Entspannungsgas in einen in einer Regenerierphase befindlichen Adsorber einer anderen Gruppe geleitet wird.

2. Verfahren nach Anspruch 1, dadurch gekennzeichnet, dass während einer Regenerierphase mindestens ein Druckausgleich zwischen Adsorbern verschiedener Gruppen erfolgt.

3. Verfahren nach Anspruch 1 oder 2, dadurch gekennzeichnet, dass die Spülung eines Adsorbers mit bei der Entspannung eines Adsorbers einer anderen Gruppe anfallendem Entspannungsgas durchgeführt wird.

4. Verfahren nach einem der Ansprüche 1 bis 3, dadurch gekennzeichnet, dass die während einer Adsorptionsphase aus den Adsorbergruppen austretenden Produktgase gemeinsam abgezogen werden.

5. Verfahren nach Anspruch 4, dadurch gekennzeichnet, dass während der letzten Stufe der Regenerierphase ein Druckaufbau mit Produktgas durchgeführt wird.

6. Verfahren nach einem der Ansprüche 1 bis 5, dadurch gekennzeichnet, dass die während einer Desorptionsphase anfallenden Restgase aus den Adsorbergruppen zumindest teilweise getrennt voneinander abgezogen werden.

7. Verfahren nach einem der Ansprüche 1 bis 6, dadurch gekennzeichnet, dass das Restgas aus einer Adsorbergruppe einer anderen Adsorbergruppe als Rohgasstrom zugeführt wird.

8. Verfahren nach einem der Ansprüche 1 bis 7, dadurch gekennzeichnet, dass jede Gruppe mindestens vier Adsorber enthält.

9. Verfahren nach einem der Ansprüche 1 bis 8, dadurch gekennzeichnet, dass alle Gruppen gleichviele Adsorber enthalten.

10. Verfahren nach Anspruch 9, dadurch gekennzeichnet, dass jeder Adsorber gleichartige Zyklen, die zeitlich gegeneinander versetzt sind, durchläuft.

11. Verfahren nach einem der Ansprüche 1 bis 10 zur Gewinnung von Wasserstoff aus einem Wasserstoff und Kohlenwasserstoffe enthaltenden Rohgas mit einer Dampfreformierung der Kohlenwasserstoffe und einer nachfolgenden adsorptiven Abtrennung des dabei erzeugten Wasserstoffs, dadurch gekennzeichnet, dass das Rohgas einer ersten Gruppe und der durch die Dampfreformierung erzeugte Rohwasserstoff einer zweiten Gruppe von Adsorbern zugeführt wird, dass der Produkt-Wasserstoff von den Austrittsenden der Adsorber beider Adsorbergruppen abgezogen wird und dass das bei der Regenerierung der ersten Adsorbergruppe anfallende Restgas als Einsatz für die Dampfreformierung und das bei der Regenerierung der zweiten Adsorbergruppe anfallende Restgas als Heizgas für die Dampfreformierung abgezogen wird.

12. Adsorptionsanlage zur Durchführung des Verfahrens nach einem der Ansprüche 1 bis 11, gekennzeichnet durch mindestens zwei Gruppen von Adsorbern, wobei die Adsorber jeder Gruppe an ihrer Eintrittsseite mit je einer Rohgasleitung und einer Restgasleitung verbunden sind und wobei die Adsorber an ihrer Austrittsseite mit einer Produktgasleitung und mit einem allen Adsorbern gemeinsamen System von Druckausgleichsleitungen und Spülgasleitungen verbunden sind.

13. Adsorptionsanlage nach Anspruch 12, dadurch gekennzeichnet, dass alle Adsorber mit einer gemeinsamen Produktgasleitung verbunden sind.

14. Adsorptionsanlage nach Anspruch 12 oder 13 mit zwei Adsorbergruppen und mit einer Anlage zur Erzeugung von Rohwasserstoff durch Dampfreformierung, dadurch gekennzeichnet, dass die der ersten Adsorbergruppe zugehörige Restgasleitung an das Eintrittsende des Dampfreformierers und die der zweiten Adsorbergruppe zugehörige Restgasleitung zu Brennern für die Beheizung des Dampfreformierers führt.

**Claims**

1. A method of separating at least two crude gas streams of different composition in a single adsorption system having a plurality of cyclically switchable adsorbers which are operated with a pressure swing, and each of which passes through an adsorption phase and a regeneration phase which comprises the stages of depressurization, purging and pressure build-up, characterised in that each crude gas stream is assigned one group of adsorbers through which the crude gas stream in question is led in cyclically switchable manner and thereby separated; that each adsorber is assigned to only one group; and that depressurization gas produced during at least one depressurization stage is led into an adsorber, of another group, which is in the regeneration phase.

2. A method according to claim 1, characterised in that, during a regeneration phase, at least one pressure equalisation takes place between adsorbers of different groups.

3. A method according to claim 1 or 2, characterised in that the purging of an adsorber is carried out using depressurization gas which is formed during the depressurization of an adsorber of another group.

4. A method according to one of claims 1 to 3, characterised in that the product gases which leave the adsorber groups during an adsorption phase are withdrawn in common.

5. A method according to claim 4, characterised in that, during the last stage of the regeneration phase, a pressure build-up with product gas is carried out.

6. A method according to one of claims 1 to 5, characterised in that the residual gases which are formed during a desorption phase are withdrawn from the adsorber groups at least partially separately from one another.

7. A method according to one of claims 1 to 6, characterised in that the residual gas from one adsorber group is fed to another adsorber group as a crude gas stream.

8. A method according to one of claims 1 to 7, characterised in that all the groups contain an equal number of adsorbers.

9. A method according to one of claims 1 to 8, characterised in that all the grops contain an equal number od adsorbers.

10. A method according to claim 9, characterised in that each adsorber passes through identical cycles which are staggered timewise with respect to one another.

11. A method according to one of claims 1 to 10, for the recovery of hydrogen from a crude gas which contains hydrogen and hydrocarbons, comprising steam reforming of the hydrocarbons and a subsequent adsorptive separation of the hydrogen which is thereby produced, characterised in that the crude gas is fed to a first group of adsorbers and the crude hydrogen produced by the steam reforming is fed to a second group of adsorbers; that the product hydrogen is withdrawn from the outlet ends of the adsorbers of both groups of adsorbers; and that the residual gas which is produced during the regeneration of the first adsorber group is withdrawn as starting material for the steam reforming, and the residual gas which is produced during the regeneration of the second adsorber group is withdrawn as heating gas for the steam reforming.

12. An adsorption system for carrying out the method according to one of claims 1 to 11, characterised by at least two groups of adsorbers, the adsorbers of each group each being connected at their inlet ends to a crude gas line and to a residual gas line, and the adsorbers being connected at their outlet ends to a product gas line and to a system of pressure equalisation lines and purge gas lines which is common to all the adsorbers.

13. An adsorption system according to claim 12, characterised in that all the adsorbers are connected to a common product gas line.

14. An adsorption system according to claim 12 or claim 13 having two adsorber groups and a system for the production of crude hydrogen by steam reforming, characterised in that the residual gas line which is assigned to the first adsorber group leads to the inlet end of the steam reformer, and the residual gas line which is assigned to the second adsorber group leads to burners which serve to heat the steam reformer.

**Revendications**

1. Procédé pour séparer au moins deux courants de gaz bruts de compositions différentes dans une seule installation d'adsorption comportant plusieurs adsorbeurs opérant avec alternance de pression et cycliquement commutables, qui exécutent chacun une phase d'adsorption et une phase de régénération comportant des étapes de détente, de balayage et de montée en pression, caractérisé en ce qu'à chaque courant de gaz brut est associé un groupe d'adsorbeurs, dans lequel le courant de gaz brut correspondant est canalisé d'une manière cycliquement commutable et est alors décomposé, en ce que chaque adsorbeur est associé seulement à un groupe et en ce que du gaz de détente obtenu au moins pendant une étape de détente est canalisé dans un adsorbeur, se trouvant dans une phase de régénération, d'un autre groupe.

2. Procédé selon la revendication 1, caractérisé en ce que, pendant une phase de régénération, au moins un équilibre de pression est établi entre les adsorbeurs de différents groupes.

3. Procédé selon la revendication 1 ou 2, caractérisé en ce que le balayage d'un adsorbeur est effectué avec du gaz de détente obtenu lors de la détente d'un adsorbeur d'un autre groupe.

4. Procédé selon l'une des revendications 1 à 3, caractérisé en ce que les gaz produits pendant une phase d'adsorption et sortant des groupes d'adsorbeurs sont déchargés en commun.

5. Procédé selon la revendication 4, caractérisé en ce que, pendant la dernière étape de la phase de régénération, un équilibre de pression est réalisé avec du gaz produit.

6. Procédé selon l'une des revendications 1 à 5, caractérisé en ce que les gaz résiduels obtenus pendant une phase de désorption sont déchargés des groupes d'adsorbeurs en étant séparés au moins partiellement l'une de l'autre.

7. Procédé selon l'une des revendications 1 à 6, caractérisé en ce que le gaz résiduel provenant d'un groupe d'adsorbeurs est introduit comme courant de gaz brut dans un autre groupe d'adsorbeurs.

8. Procédé selon l'une des revendications 1 à 7, caractérisé en ce que chaque groupe contient au moins quatre adsorbeurs.

9. Procédé selon l'une des revendications 1 à 8, caractérisé en ce que tous les groupes contiennent le même nombre d'adsorbeurs.

10. Procédé selon la revendication 9, caractérisé en ce que chaque adsorbeur effectue des cycles de même type, qui sont décalés temporellement l'un par rapport à l'autre.

11. Procédé selon l'une des revendications 1 à 10, pour obtenir de l'hydrogène à partir d'un gaz brut contenant de l'hydrogène et des hydrocarbures en faisant intervenir un réformage en phase vapeur des hydrocarbures et une séparation ultérieure par adsorption de l'hydrogène ainsi produit, caractérisé en ce que le gaz est introduit dans un premier groupe et l'hydrogène brut produit par le réformage en phase vapeur est introduit dans un second groupe d'adsorbeurs, en ce que l'hydrogène produit est déchargé des extrémités de sortie des adsorbeurs des deux groupes d'adsorbeurs et en ce que le gaz résiduel obtenu lors de la régénération du premier groupe d'adsorbeurs est déchargé comme gaz actif pour le réformage en phase vapeur alors que le gaz résiduel obtenu lors de la régénération du second groupe d'adsorbeur est évacué comme gaz de chauffage pour le réformage en phase vapeur.

12. Installation d'adsorption pour la mise in oeuvre du procédé selon l'une des revendications 1 à 11, caractérisée par au moins deux groupes d'adsorbeurs, les adsorbeurs de chaque groupe étant reliés à leur côté d'entrée respectivement avec une canalisation de gaz brut et une canalisation de gaz résiduel, tandis que les adsorbeurs sont reliés à leur côté de sortie avec une canalisation de gaz produit et avec un groupe, commun à tous les adsorbeurs, de canalisation d'équilibrage de pression et de canalisation de gaz de balayage.

13. Installation d'adsorption selon la revendication 12, caractérisée en ce que tous les adsorbeurs sont reliés à une canalisation commune de gaz produits.

14. Installation d'adsorption selon l'une des revendications 12 ou 13, comportant deux groupes d'adsorbeurs, et une installation pour produire de l'hydrogène brut par réformage en phase vapeur, caractérisées en ce que la canalisation de gaz résiduel associée au premier groupe d'adsorbeurs aboutit à l'extrémité d'entrée du dispositif de réformage en phase vapeur tandis que la canalisation de gaz résiduel associée au second groupe d'adsorbeurs aboutit à des brûleurs de chauffage du dispositif de réformage en phase vapeur.

Fig.1

0 053 837

| 1 | AA | | | | E1 | E2 | E3 | E4 | E5 | S | B3 | B2 | B1 | B0 |
|---|----|----|----|----|----|----|----|----|----|----|----|----|----|----|
| 2 | B1 | B0 | AB | | E1 | E2 | E3 | E4 | E5 | S | | B3 | B2 | |
| 3 | B3 | B2 | B1 | B0 | AA | | E1 | E2 | E3 | E4 | E5 | S | | |
| 4 | S | B3 | B2 | B1 | B0 | AB | | E1 | E2 | E3 | E4 | E5 | | |
| 5 | E4 | E5 | S | B3 | B2 | B1 | B0 | AA | | E1 | E2 | E3 | E4 | |
| 6 | E3 | E4 | E5 | S | B3 | B2 | B1 | B0 | AB | | E1 | E2 | | |
| 7 | E1 | E2 | E3 | E4 | E5 | S | B3 | B2 | B1 | B0 | AA | | | |
| 8 | AB | E1 | E2 | E3 | E4 | E5 | S | B3 | B2 | B1 | B0 | AB | | |
| 9 | AA | E1 | E2 | E3 | E4 | E5 | S | B3 | B2 | B1 | B0 | AA | | |
| 10 | AB | E1 | E2 | E3 | E4 | E5 | S | B3 | B2 | B1 | B0 | AB | | |

*Fig. 2*

0 053 837

11

Fig.3

0 053 837